(19) Europäisches Patentamt
European Patent Office
Office européen des brevets

(11) Veröffentlichungsnummer: **0 351 589 A2**

(12) # EUROPÄISCHE PATENTANMELDUNG

(21) Anmeldenummer: **89111527.1**

(22) Anmeldetag: **24.06.89**

(51) Int. Cl.⁴: **A01N 43/58 , A01N 43/80**

(30) Priorität: **16.07.88 DE 3824210**

(43) Veröffentlichungstag der Anmeldung:
**24.01.90 Patentblatt 90/04**

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Leyendecker, Joachim, Dr.**
**Stahlbühlring 79**
**D-6802 Ladenburg(DE)**
Erfinder: **Theobald, Hans, Dr.**
**Queichstrasse 6**
**D-6703 Limburgerhof(DE)**
Erfinder: **Bürstinghaus, Rainer, Dr.**
**Robert-Koch-Strasse 2**
**D-4404 Telgte(DE)**
Erfinder: **Künast, Christoph, Dr.**
**Salierstrasse 2**
**D-6701 Otterstadt(DE)**
Erfinder: **Hofmeister, Peter, Dr.**
**Bernard-Humblot-Strasse 12**
**D-6730 Neustadt(DE)**

(54) **3(2H)-Pyridazinonderivate zur Bekämpfung von Schnecken.**

(57) Verwendung von 3(2H)-Pyridazinonderivaten I

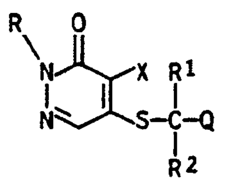

(I),

in der die Substituenten die folgende Bedeutung haben:
R $C_2$-$C_6$-Alkyl,
$R^1$, $R^2$ Wasserstoff, $C_1$-$C_4$-Alkyl
X Halogen
Q gegebenenfalls substituiertes Phenyl oder Isoxazolyl,
mit der Maßgabe, daß R keine tert.-Butylgruppe darstellt, wenn X für Chlor und Q für 4-tert.-Butylphenyl steht, zur Bekämpfung von Schnecken sowie Schneckenfraßköder und Saatgutbeizmittel, enthalten den Wirkstoff I.

EP 0 351 589 A2

## 3(2H)-Pyridazinonderivate zur Bekämpfung von Schnecken

Die Erfindung betrifft die Verwendung von 3(2H)-Pyridazinonderivaten der allgemeinen Formel I

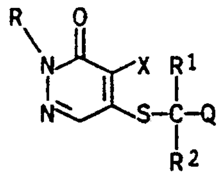

(I),

in der die Substituenten die folgende Bedeutung haben:
R $C_2$-$C_6$-Alkyl,
$R^1$, $R^2$ Wasserstoff, $C_1$-$C_4$-Alkyl,
X Halogen,
Q gegebenenfalls substituiertes Phenyl oder Isoxazolyl,
mit der Maßgabe, daß R keine tert.-Butylgruppe darstellt, wenn X für Chlor und Q für 4-tert.-Butylphenyl steht, zur Bekämpfung von Schnecken.

Schnecken sind in gemäßigten, subtropischen und tropischen Pflanzenkulturen bedeutende Schädlinge. Aus verschiedenen Gründen z.B. wegen Quarantänevorschriften (Parella, M.P.; Robb, K.; Morishita, P.; Calif. Agriculture, 1985, Jan/Feb., 6-8) gewinnt Schneckenbekämpfung an Bedeutung.

Aus der EP-A-134 439 ist bekannt, daß 3(2H)-Pyridazinonderivate der allgemeinen Formel I, worin Q einen ggf. substituierten Phenylrest bedeutet, ausgezeichnete insektizide und akarizide Eigenschaften besitzen. In der älteren deutschen Anmeldung P 37 42 266.9 sind isoxazolylmethylsubstituierte 3(2H)-Pyridazinone mit insektiziden Eigenschaften beschrieben. Eine molluskizide Wirkung der Pyridazinonderivate I ist diesen Schriften nicht zu entnehmen.

Der Erfindung lag die Aufgabe zugrunde, ein neues Mittel sowie ein Verfahren zur Bekämpfung von Schnecken zu finden.

Erfindungsgemäß erhält man ein gegen Schnecken wirksames z.B. als Streumittel formulierbares Präparat durch die Verwendung der eingangs definierten 3(2H)-Pyridazinonderivate I.

Die 3(2H)-Pyridazinonderivate I besitzen ausgeprägte molluskizide Eigenschaften sowohl bei Nackt- als auch bei Gehäuseschnecken und eignen sich hervorragend zur Schneckenbekämpfung in landwirtschaftlichen und gärtnerischen Pflanzenkulturen.

Die Substituenten in Formel I haben im einzelnen folgende Bedeutung:
R - unverzweigtes oder verzweigtes $C_2$-$C_6$-Alkyl, bevorzugt $C_2$-$C_4$-Alkyl wie Ethyl, Propyl, Isopropyl, Butyl, sec.-Butyl, iso-Butyl und besonders bevorzugt tert.-Butyl,
$R^1$, $R^2$- Wasserstoff;
- unverzweigtes oder verzweigtes $C_1$-$C_4$-Alkyl wie Methyl, Ethyl, Propyl, Isopropyl, Butyl, iso-Butyl, sec-Butyl, tert.-Butyl,
X - Halogen, bevorzugt Chlor oder Brom, besonders bevorzugt Chlor,
Q - gegebenenfalls substituiertes Phenyl oder Isoxazolyl, beispielsweise kommt das in den Formeln IIa und IIb wiedergegebene Substitutionsmuster in Betracht:

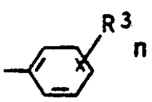

(IIa)

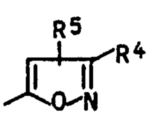

(IIb),

wobei die Substituenten die folgende Bedeutung haben:
$R^3$ - Wasserstoff;
- Halogen, bevorzugt Fluor, Chlor, Brom und Iod, besonders bevorzugt Fluor und Chlor;
- unverzweigtes oder verzweigtes $C_1$-$C_{12}$-Alkyl, bevorzugt $C_1$-$C_8$-Alkyl, besonders bevorzugt $C_3$-$C_8$-Alkyl wie iso-Propyl, tert.-Butyl, iso-Butyl, n-Hexyl, n-Heptyl, n-Octyl;
-$C_3$-$C_{10}$-Cycloalkyl, bevorzugt $C_3$-$C_6$-Cycloalkyl, besonders bevorzugt $C_5$-$C_6$-Cycloalkyl wie Cyclopentyl und Cyclohexyl;
- unverzweigtes oder verzweigtes $C_1$-$C_{12}$-Alkoxy, bevorzugt $C_2$-$C_{10}$-Alkoxy, besonders bevorzugt $C_2$-$C_8$-Alkoxy wie Ethoxy, n-Propyloxy, iso-Propyloxy, n-Pentyloxy, n-Hexyloxy, n-Heptyloxy, n-Octyloxy,

- unverzweigtes oder verzweigtes $C_1$-$C_6$-Halogenalkyl, bevorzugt $C_1$-$C_4$-Halogenalkyl, besonders bevorzugt $C_1$-$C_2$-Fluor- und Chloralkyl wie Fluormethyl, Difluormethyl, Trifluormethyl, Chlormethyl, Dichlormethyl, Trichlormethyl, Chlorfluormethyl, Dichlorfluormethyl, Chlordifluormethyl, 2,2,2-Trifluorethyl und 2,2,2-Trichlorethyl;
- unverzweigtes oder verzweigtes $C_1$-$C_6$-Halogenalkoxy, bevorzugt $C_1$-$C_4$-Halogenalkoxy, besonders bevorzugt $C_1$-$C_2$-Halogenalkoxy wie Trifluormethoxy und Pentafluorethoxy;
- Cyano, Thiocyano (-SCN);
- Nitro;
- unverzweigtes oder verzweigtes $C_1$-$C_6$-Alkenyloxy, bevorzugt $C_1$-$C_4$-Alkenyloxy, besonders bevorzugt $C_1$-$C_3$-Alkenyloxy;
- unverzweigtes oder verzweigtes $C_1$-$C_6$-Alkylthio, bevorzugt $C_1$-$C_4$-Alkylthio, besonders bevorzugt $C_1$-$C_2$-Alkylthio wie Methylthio oder Ethylthio;
- unverzweigtes oder verzweigtes $C_1$-$C_6$-Halogenalkylthio, bevorzugt $C_1$-$C_4$-Halogenalkylthio;
- Trimethylsilyl;
- Hydroxyl;
- Dialkylamino wie Dimethylamino;
- Alkoxycarbonyl wie $CO_2C_2H_5$;
- Phenyl-, bzw. phenylsubstituierte Reste der Struktur

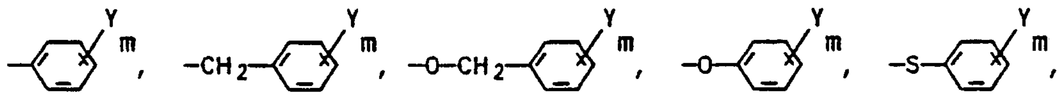

wobei Y Halogen wie Fluor, Chlor oder Brom, $C_1$-$C_6$-Alkyl, $C_3$-$C_6$-Cycloalkyl, $C_1$-$C_6$-Halogenalkyl, $C_1$-$C_6$-Halogenalkoxy, Cyano oder Nitro bedeutet, und m eine Zahl von 0-5 bedeutet, wobei Y gleich oder verschieden ist, wenn m eine Zahl von 2-5 bedeutet,

n eine Zahl von 1-5, wobei $R^3$ gleich oder verschieden ist, wenn n eine Zahl von 2-5 ist, bevorzugt 1 oder 2, besonders bevorzugt 1,

$R^4$ - Wasserstoff
- unverzweigtes oder verzweigtes $C_1$-$C_8$-Alkyl wie Methyl, Ethyl, n-Propyl, iso-Propyl, n-Butyl, iso-Butyl, sec-Butyl, tert.-Butyl, n-Hexyl, 1-Ethylpentyl und 2,4,4-Trimethylpentyl, bevorzugt Methyl, iso-Propyl, tert.-Butyl, 1-Ethylpentyl und 2,4,4-Trimethylpentyl;
- unverzweigtes oder verzweigtes $C_2$-$C_8$-Alkenyl, bevorzugt $C_2$-$C_5$-Alkenyl wie Vinyl, Allyl und 2,2-Dimethylvinyl;
- unverzweigtes oder verzweigtes $C_1$-$C_4$-Halogenalkyl wie 1,2-Dibrom-2,2-dimethylethyl, bevorzugt $C_1$-$C_2$-Fluor- oder Chloralkyl wie Fluormethyl, Difluormethyl, Trifluormethyl, Chlormethyl, Dichlormethyl, Trichlormethyl, Chlorfluormethyl, Dichlorfluormethyl, Chlordifluormethyl, 2,2,2-Trifluorethyl und 2,2,2-Trichlorethyl;
- unverzweigtes oder verzweigtes $C_2$-$C_8$-Alkoxyalkyl, bevorzugt $C_2$-$C_4$-Alkoxyalkyl wie Methoxymethyl, Ethoxymethyl, n-Propoxymethyl, iso-Propoxymethyl, 1-Methoxyethyl, 2-Methoxyethyl, 1-Ethoxyethyl, 2-Ethoxyethyl, 1-n-Propoxyethyl, 2-n-Propoxyethyl, 1-iso-Propoxyethyl, 2-iso-Propoxyethyl, 1-Methoxy-n-propyl, 2-Methoxy-n-propyl, 3-Methoxy-n-propyl, 1-Methoxy-isopropyl und 2-Methoxy-isopropyl;
- $C_3$-$C_{10}$-Cycloalkyl, bevorzugt Cyclopropyl, Cyclobutyl, Cyclopentyl, Cyclohexyl, Cyclooctyl und Cyclodecyl-, $C_2$-$C_5$-Alkoxycarbonyl, bevorzugt $C_2$-$C_3$-Alkoxycarbonyl wie Methoxycarbonyl und Ethoxycarbonyl,
- Aryl, bevorzugt Phenyl und Naphthyl, besonders bevorzugt Phenyl; -$C_7$-$C_{20}$-Aralkyl, bevorzugt $C_7$-$C_{12}$-Phenylalkyl, wie Benzyl und Phenethyl;
- ein- bis dreifach durch Halogen substituiertes Aryl, bevorzugt durch Fluor, Chlor oder Brom ein- bis dreifach substituiertes Phenyl wie 2-Fluorphenyl, 2-Chlorphenyl, 2-Bromphenyl, 3-Fluorphenyl, 3-Chlorphenyl, 3-Bromphenyl, 4-Fluorphenyl, 4-Chlorphenyl, 4-Bromphenyl, 2,3-Difluorphenyl, 2,3-Dichlorphenyl, 2,4-Difluorphenyl, 2,4-Dichlorphenyl, 2-Chlor-4-fluorphenyl, 4-Chlor-2-fluorphenyl, 2,5-Difluorphenyl, 2,5-Dichlorphenyl, 3,4-Difluorphenyl, 3,4-Dichlorphenyl, 3,5-Difluorphenyl, 3,5-Dichlorphenyl, 3-Chlor-5-fluorphenyl, 5-Chlor-3-fluorphenyl, 2,6-Difluorphenyl, 2,6-Dichlorphenyl, 2-Chlor-6-fluorphenyl, 2,3,4-Trifluorphenyl, 2,3,4-Trichlorphenyl, 2,4,6-Trifluorphenyl und 2,4,6-Trichlorphenyl;
- ein- bis dreifach durch $C_1$-$C_8$-Alkyl substituiertes Aryl, bevorzugt ein- bis dreifach durch $C_1$-$C_4$-Alkyl substituiertes Phenyl wie 2-Methylphenyl, 3-Methylphenyl, 4-Methylphenyl, 2-Ethylphenyl, 3-Ethylphenyl, 4-Ethylphenyl, 2-n-Propylphenyl, 3-n-Propylphenyl, 4-n-Propylphenyl, 3-iso-Propylphenyl, 4-iso-Propylphenyl, 2-n-Butylphenyl, 3-n-Butylphenyl, 4-n-Butylphenyl, 3-iso-Butylphenyl, 4-iso-Butylphenyl, 3-sec-Butylphenyl,

4-sec-Butylphenyl, 3-tert.-Butylphenyl, 4-tert.-Butylphenyl, 2,3-Dimethylphenyl, 2,4-Dimethylphenyl, 2,5-Dimethylphenyl, 3,4-Dimethylphenyl, 3,5-Dimethylphenyl, 2,6-Dimethylphenyl, 3,6-Dimethylphenyl, 2,4-Diethylphenyl, 2,4-Di-iso-propylphenyl, 3,5-Di-tert.-butylphenyl, 2,6-Di-tert.-butylphenyl, 2,4,6-Trimethylphenyl, 2,3,4-Trimethylphenyl, 2,3,5-Trimethylphenyl, 3,4,5-Trimethylphenyl;

- ein- bis dreifach durch $C_1$-$C_8$-Alkoxy substituiertes Aryl, bevorzugt durch $C_1$-$C_8$-Alkoxy substituiertes Phenyl wie 2-Methoxyphenyl, 3-Methoxyphenyl, 4-Methoxyphenyl, 2-Ethoxyphenyl, 3-Ethoxyphenyl, 4-Ethoxyphenyl, 2-n-Propyloxyphenyl, 3-n-Propyloxyphenyl, 4-n-Propyloxyphenyl, 3-iso-Propyloxyphenyl, 4-iso-Propyloxyphenyl, 2-n-Butyloxyphenyl, 3-n-Butyloxyphenyl, 4-n-Butyloxyphenyl, 2-sec-Butyloxyphenyl, 4-sec-Butyloxyphenyl, 2-tert.-Butyloxyphenyl, 4-tert.-Butyloxyphenyl, 2-n-Hexyloxyphenyl, 3-n-Hexyloxyphenyl, 4-n-Hexyloxyphenyl, 2-n-Octyloxyphenyl, 3-n-Octyloxyphenyl, 4-n-Octyloxyphenyl, 2,3-Dimethoxyphenyl, 2,4-Dimethoxyphenyl, 3,4-Dimethoxyphenyl, 2,5-Dimethoxyphenyl, 3,5-Dimethoxyphenyl, 2,6-Dimethoxyphenyl, 3,4-Diethoxyphenyl, 2,3,4-Trimethoxyphenyl, 2,3,5-Trimethoxyphenyl, 2,4,5-Trimethoxyphenyl, 2,4,6-Trimethoxyphenyl, 3,4,5-Trimethoxyphenyl;

- ein- bis dreifach durch $C_1$-$C_4$-Halogenalkyl substituiertes Aryl, bevorzugt durch Fluor und/oder Chlor ein- bis fünffach substituiertes $C_1$-$C_2$-Alkyl monosubstituiert am Phenyl, wie 2-Fluormethylphenyl, 3-Fluormethylphenyl, 4-Fluormethylphenyl, 2-Difluormethylphenyl, 3-Difluormethylphenyl, 4-Difluormethylphenyl, 2-Trifluormethylphenyl, 3-Trifluormethylphenyl, 4-Trifluormethylphenyl, 2-Chlormethylphenyl, 3-Chlormethylphenyl, 4-Chlormethylphenyl, 2-Dichlormethylphenyl, 3-Dichlormethylphenyl, 4-Dichlormethylphenyl, 2-Trichlormethylphenyl, 3-Trichlormethylphenyl, 4-Trichlormethylphenyl, 2-Chlorfluormethylphenyl, 3-Chlorfluormethylphenyl, 4-Chlorfluormethylphenyl, 2-Dichlorfluormethylphenyl, 3-Dichlorfluormethylphenyl, 4-Dichlorfluormethylphenyl, 2-Chlordifluormethylphenyl, 3-Chlordifluormethylphenyl, 4-Chlordifluormethylphenyl, 1,1-Difluorethylphenyl, 1,1-Dichlorethylphenyl, ortho-, meta-oder para-1,1,2-Trifluorethylphenyl, ortho-, meta-oder para-1,1,2-Trichlorethylphenyl, ortho- meta- oder para-1,1,2,2-Tetrafluorethylphenyl, ortho-, meta- oder para-1,1,2,2-Tetrachlorethylphenyl, ortho-, meta- oder para-1,2,2,2-Tetrafluorethylphenyl, ortho-, meta- oder para-1,2,2,2-Tetrachlorethylphenyl, ortho-, meta- oder para-Pentafluorethylphenyl und ortho-, meta- oder para-Pentachlorethylphenyl;

- ein- bis dreifach durch $C_1$-$C_4$-Halogenalkoxy substituiertes Aryl, bevorzugt durch Fluor und/oder Chlor ein- bis fünffach substituiertes $C_1$-$C_2$-Alkoxy monosubstituiert am Phenyl wie 2-Fluormethoxyphenyl, 3-Fluormethoxyphenyl, 4-Fluormethoxyphenyl, 2-Difluormethoxyphenyl, 3-Difluormethoxyphenyl, 4-Difluormethoxyphenyl, 2-Trifluormethoxyphenyl, 3-Trifluormethoxyphenyl, 4-Trifluormethoxyphenyl, 2-Chlormethoxyphenyl, 3-Chlormethoxyphenyl, 4-Chlormethoxyphenyl, 2-Dichlormethoxyphenyl, 3-Dichlormethoxyphenyl, 4-Dichlormethoxyphenyl, 2-Trichlormethoxyphenyl, 3-Trichlormethoxyphenyl, 4-Trichlormethoxyphenyl, 2-Chlorfluormethoxyphenyl, 3-Chlorfluormethoxyphenyl, 4-Chlorfluormethoxyphenyl, 2-Dichlorfluormethoxyphenyl, 3-Dichlorfluormethoxyphenyl, 4-Dichlorfluormethoxyphenyl, 2-chlordifluormethoxyphenyl, 3-Chlordifluormethoxyphenyl, 4-Chlordifluormethoxyphenyl, 1,1-Difluorethoxyphenyl, 1,1-Dichlorethoxyphenyl, ortho-, meta- oder para-1,1,2-Trifluorethoxyphenyl, ortho-, meta- oder para-1,1,2-Trichlorethoxyphenyl, ortho-, meta- oder para-1,1,2,2-Tetrafluorethoxyphenyl, ortho-, meta- oder para-1,1,2,2-Tetrachlorethoxyphenyl, ortho-, meta- oder para-1,2,2,2-Tetrafluorethoxyphenyl, ortho-, meta- oder para-1,2,2,2-Tetrachlorethoxyphenyl, ortho-, meta- oder para-Pentafluorethoxyphenyl und ortho-, meta- oder para-Pentachlorethoxyphenyl;

- ein- bis dreifach durch Phenyl substituiertes Aryl, bevorzugt durch Phenyl monosubstituiertes Phenyl wie 2-Phenylphenyl, 3-Phenylphenyl und 4-Phenylphenyl;

- ein- bis dreifach durch Phenoxy substituiertes Aryl, bevorzugt durch Phenoxy monosubstituiertes Phenyl wie 2-Phenoxyphenyl, 3-Phenoxyphenyl und 4-Phenoxyphenyl;

- ein- bis dreifach durch Cyano substituiertes Aryl, bevorzugt durch Cyano monosubstituiertes Phenyl wie 2-Cyanophenyl, 3-Cyanophenyl und 4-Cyanophenyl;

- ein- bis dreifach durch Nitro substituiertes Aryl, bevorzugt durch Nitro mono- oder disubstituiertes Phenyl wie 2-Nitrophenyl, 3-Nitrophenyl, 4-Nitrophenyl, 2,3-Dinitrophenyl, 2,4-Dinitrophenyl, 3,4-Dinitrophenyl, 2,5-Dinitrophenyl, 3,5-Dinitrophenyl und 2,6-Dinitrophenyl;

- zwei- bis dreifach durch Halogen und Nitro substituiertes Aryl, bevorzugt zwei- bis dreifach durch Fluor und/oder Chlor und Nitro substituiertes Phenyl, wie 2-Fluor-3-nitrophenyl, 2-Fluor-4-nitrophenyl, 2-Fluor-5-nitrophenyl, 2-Fluor-6-nitrophenyl, 2-Chlor-3-nitrophenyl, 2-Chlor-4-nitrophenyl, 2-Chlor-5-nitrophenyl, 2-Chlor-6-nitrophenyl, 3-Chlor-2-nitrophenyl, 4-Chlor-2-nitrophenyl, 4-Chlor-3-nitrophenyl, 5-Chlor-2-nitrophenyl, 2,4-Dichlor-5-nitrophenyl, 2,6-Dichlor-5-nitrophenyl, 2,6-Dichlor-3-nitrophenyl, 2,4-Dichlor-3-nitrophenyl;

- zwei- bis dreifach durch $C_1$-$C_4$-Alkyl und Nitro substituiertes Aryl, bevorzugt zwei- bis dreifach durch $C_1$-$C_2$-Alkyl und Nitro substituiertes Phenyl wie 2-Methyl-3-nitrophenyl, 4-Methyl-3-nitrophenyl, 2,6-Dimethyl-3-nitrophenyl;

- zwei- bis dreifach durch Halogen und $C_1$-$C_4$-Alkoxy substituiertes Aryl, bevorzugt zwei- bis dreifach durch Brom und $C_1$-$C_2$-Alkoxy substituiertes Phenyl wie 3-Brom-2-methoxyphenyl, 4-Brom-2-methoxyphenyl, 5-Brom-2-methoxyphenyl, 2-Brom-4-methoxyphenyl, 3-Brom-4-methoxyphenyl;
- im Arylteil ein- bis dreifach durch Halogen sustituiertes $C_7$-$C_{20}$-Aralkyl, bevorzugt im Phenylteil durch Fluor oder Chlor monosubstituiertes $C_7$-$C_{20}$-Phenyl-alkyl wie 4-Fluorbenzyl und 4-Chlorbenzyl;
- im Arylteil ein- bis dreifach durch $C_1$-$C_8$-Alkyl substituiertes $C_7$-$C_{20}$-Aralkyl, bevorzugt im Phenylteil durch $C_1$-$C_4$-Alkyl monosubstituiertes $C_7$-$C_{10}$-Phenylalkyl, besonders bevorzugt im Phenylteil durch $C_1$-$C_2$-Alkyl monosubstituiertes $C_7$-$C_{10}$-Phenylalkyl wie 4-Methylphenyl, 4-Ethylbenzyl, 4-Methylphenethyl und 2(4-tert.-Butylphenyl)-1-methylethyl;
- im Arylteil ein- bis dreifach durch $C_1$-$C_8$-Alkoxy substituiertes $C_7$-$C_{20}$-Aralkyl, bevorzugt im Phenylteil $C_1$-$C_4$-Alkoxy monosubstituiertes $C_7$-$C_{20}$-Phenylalkyl, besonders bevorzugt im Phenylteil durch $C_1$-$C_2$-Alkoxy monosubstituiertes $C_7$-$C_{10}$-Phenylalkyl, wie 4-Methoxybenzyl, 4-Ethoxybenzyl und 4-Methoxyphenethyl;
- im Arylteil ein- bis dreifach durch $C_1$-$C_4$-Halogenalkyl, substituiertes $C_7$-$C_{20}$-Aralkyl, bevorzugt im Phenylteil $C_1$-$C_4$-Fluor- oder Chloralkyl monosubstituiertes $C_7$-$C_{10}$-Phenylalkyl, besonders bevorzugt im Phenylteil $C_1$-$C_2$-Fluor-oder Chloralkyl monosubstituiertes $C_7$-$C_{10}$-Phenylalkyl wie 4-Trifluormethylbenzyl und 4-Trichlormethylbenzyl;
- im Arylteil ein- bis dreifach durch $C_1$-$C_4$-Halogenalkoxy substituiertes $C_7$-$C_{20}$-Aralkyl, bevorzugt im Phenylteil durch $C_1$-$C_2$-Halogenalkyl monosubstituiertes $C_7$-$C_{10}$-Phenyl-alkyl, besonders bevorzugt durch Trifluormethyl und Trichlormethyl monosubstituiertes $C_7$-$C_{10}$-Phenylalkyl wie 4-Trifluormethoxybenzyl und 4-Trichlormethoxybenzyl;
- im Arylteil ein- bis dreifach durch Cyano substituiertes $C_7$-$C_{20}$-Aralkyl, bevorzugt im Phenylteil durch Cyano monosubstituiertes $C_7$-$C_{10}$-Phenyl-alkyl wie 4-Cyanobenzyl und 4-Cyanophenethyl,
$R^5$ - im Arylteil ein- bis dreifach durch Nitro substituiertes $C_7$-$C_{20}$-Aralkyl, bevorzugt durch Nitro monosubstituiertes $C_7$-$C_{10}$-Phenylalkyl wie 3-Nitrobenzyl,
- Wasserstoff, bevorzugt Wasserstoff in 4-Position;
- Halogen, bevorzugt Fluor, Chlor und Brom, besonders bevorzugt Brom in 5-Position;
- unverzweigtes oder verzweigtes $C_1$-$C_8$-Alkyl, bevorzugt unverzweigtes oder verzweigtes $C_1$-$C_4$-Alkyl, besonders bevorzugt Methyl in 5-Position;
- unverzweigtes oder verzweigtes $C_2$-$C_8$-Alkenyl, bevorzugt unverzweigtes oder verzweigtes $C_2$-$C_4$-Alkenyl, besonders bevorzugt Vinyl, Methylvinyl und Dimethylvinyl.

Die Herstellung der 3(2H)-Pyridazinonderivate I kann im Fall von Q = ggf. substituiertes Phenyl wie in EP-A-134 439 beschrieben erfolgen. Im Fall von Q = ggf. substituiertes Isoxazolyl werden die Verbindungen durch Umsetzung zwischen 2-tert.-Butyl-5-mercapto-3(2H)-pyridazinonen der Formel III und einem Isoxazol der allgemeinen Formel IV in Gegenwart einer Base im Temperaturbereich von (-20) bis 250 °C, vorzugsweise von 20 bis 120 °C nach folgender Reaktionsgleichung hergestellt:

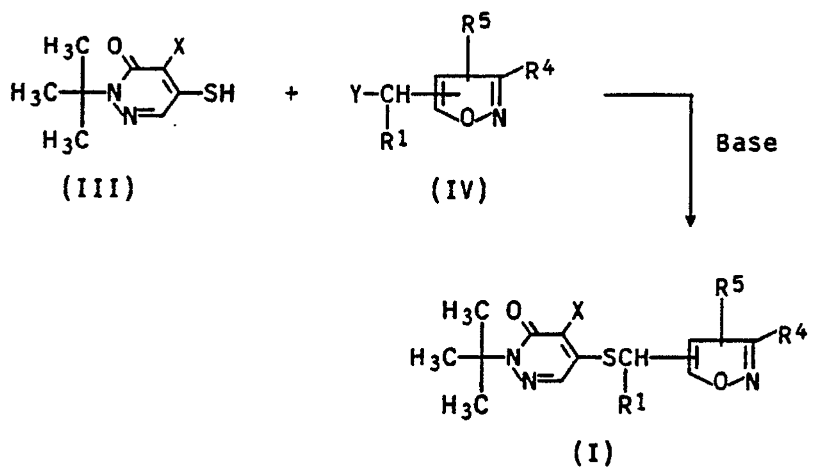


2-tert.-Butyl-5-mercapto-3(2H)-pyridazinone der Formel III sind aus EP-A-134 439 bekannt und können nach den dort beschriebenen Methoden hergestellt werden.

Die Isoxazole der allgemeinen Formel IV sind zum Teil aus DE-A-25 49 962 und DE-A-27 54 832 bekannt oder können nach den dort beschriebenen Methoden erhalten werden.

Der Rest Y bedeutet eine Abgangsgruppe wie beispielsweise einen Sulfonsäurerest oder ein Halogen. Unter den Sulfonsäureestern sind Methansulfonyl, Trifluormethansulfonyl, Benzolsulfonyl und p-Toluolsulfonyl, unter den Halogenen sind Chlor und Brom bevorzugt; besonders bevorzugt wird Chlor.

Zur Herstellung der erfindungsgemäßen Verbindungen I nach den vorstehend beschriebenen Methoden

setzt man die Ausgangsstoffe üblicherweise in stöchiometrischem Verhältnis ein. Ein Überschuß der einen oder anderen Komponente kann gegebenenfalls von Vorteil sein.

Die Umsetzungen verlaufen gewöhnlich oberhalb von -20 °C mit ausreichenden Geschwindigkeiten. 120 °C müssen im allgemeinen nicht überschritten werden. Da sie in einigen Fällen unter Wärmeentwicklung verlaufen, kann es von Vorteil sein, Kühlmöglichkeiten vorzusehen.

Man setzt normalerweise mindestens äquivalente Mengen einer Base zu III und/oder IV zu, kann aber diese auch im Überschuß oder gegebenenfalls als Lösungsmittel verwenden. Als Basen eignen sich beispielsweise Hydroxide von Alkali- und Erdalkalimetallen, wie Natriumhydroxid, Kaliumhydroxid und Calciumhydroxid, Alkoholate von Alkali- und Erdalkalimetallen, wie Natriummethylat, Natriumethylat, Calciummethanolat oder Kalium-tert.-butylat; Alkali- oder Erdalkalimetallhydride, wie Natriumhydrid, Kaliumhydrid oder Calciumhydrid; Alkali- oder Erdalkalicarbonate, wie Natrium carbonat, Kaliumcarbonat oder Calciumcarbonat; aliphatische Amine, wie Dimethylamin, Triethylamin oder Diisopropylamin; heterocyclische Amine, wie Piperidin, Piperazin oder Pyrrolidin; aromatische Amine, wie Pyridin oder Pyrrol.

Die Umsetzung wird zweckmäßigerweise in einem Lösungsmittel oder Verdünnungsmittel durchgeführt. Hierzu eignen sich bespielsweise aliphatische Kohlenwasserstoffe, wie n-Pentan, n-Hexan, das Hexan-Isomerengemisch und Petrolether; halogenierte Kohlenwasserstoffe wie Chlorbenzol, Methylenchlorid, Ethylenchlorid, Chloroform, Tetrachlorethylen; aromatische Kohlenwasserstoffe, wie Benzol, Toluol, die Xylole und deren Isomerengemische, Benzin; Alkohole, wie Methanol, Ethanol, n-Propanol und Isopropanol; Ether, wie Diethyl-, Di-n-butylether, Methyl-tert.-butylether, Tetrahydrofuran und Dioxan; Ketone, wie Aceton, Methylethylketon und Methylisopropylketon: Nitrile, wie Acetonitril und Propionitril; aprotische dipolare Lösungsmittel wie Dimethylformamid, Dimethylsulfoxid oder Pyridin. Auch Gemische dieser Stoffe können als Lösungs- und Verdünnungsmittel verwendet werden.

Zweckmäßigerweise wird das 2-tert.-Butyl-5-mercapto-3(2H)-pyridazinon der Formel III in einem Verdünnungs- oder Lösungsmittel vorgelegt, unter anschließender Zugabe des Isoxazols IV. Zur Isolierung der neuen Verbindungen I wird nach üblichen Methoden vorgegangen. Die anfallenden Produkte können durch Umkristallisieren, Extrahieren oder Chromatographieren gereinigt werden.

Geeignete Formulierungen für Molluskizide sind z.B. in GB-A-2 087 723, EP-A-190 595, DE-A-35 03 608, DE-A-35 00 468 und DE-A-37 06 358 beschrieben. Sie enthalten im allgemeinen u.a. ein Trägermaterial, einen Fraßstoff bzw. ein Lockmittel, ein Bindemittel und den Wirkstoff sowie ggf. übliche Zusatzstoffe wie Konservierungsmittel, Farbstoffe, Lockstoffe, Füllmittel, Repellents, Wasser, organische Solventien, oberflächenaktive Stoffe.

Als (feste) Trägerstoffe kommen in Frage z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen z.B. gebrochene und fraktionierte natürliche Gesteine wie Calcit, Marmor, Bims, Sepiolith, Dolomit, synthetische Granulate aus anorganischen und organischen Mehlen sowie Granulate aus organischem Material wie Sägemehl, Kokosnußschalen, Maiskolben und Tabakstengel, in Betracht.

Als Fraßstoffe können alle üblichen in derartigen Ködern verwendbaren Futtersubstanzen enthalten sein. Vorzugsweise in Betracht kommen gemahlenes Getreide, wie z.B. Weizenmehl, Weizenschrot und Gerstenschrot, ferner Sojaschrot, Kleie, Reisstärke, Fischmehl, Fleischmehl und Melasse. Es kann entweder nur ein Fraßstoff oder auch ein Gemisch aus mehreren Fraßstoffen vorhanden sein.

Als Bindemittel können alle üblichen für derartige Zwecke verwendbaren Kleber vorhanden sein. Vorzugsweise infrage kommen Methylcellulose, Zucker, Dextrin, Stärke, Alginate, Glycole, Polyvinylpyrrolidon, Lingninsulfonat, Gummiarabicum, Polyvinylalkohol und Polyvinylacetat. Es können ein oder mehrere Bindemittel enthalten sein.

Als Beispiele für gegebenenfalls vorhandene Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt.

Als Farbstoffe, die als Zusatzstoffe in Betracht kommen, seien anorganische Pigmente, wie Eisenoxid, Titandioxid und Ferrocyanblau und organische Farbstoffe, wie Anthrachinon-, Azo- und Metallphthalocyaninfarbstoffe genannt.

Als Stoffe, die einen Lockreiz auf Bodenschädlinge ausüben, können alle üblichen für diesen Zweck geeigneten Komponenten verwendet werden. Beispielhaft genannt seien Anis und Anisöl.

Als Repellents, die eine abweisende Wirkung auf warmblütige Lebewesen, wie Hunde und Igel, ausüben, können alle üblichen für diesen Zweck geeigneten Komponenten eingesetzt werden. Beispielhaft genannt sei Nonylsäurevanillylamid.

Als organische Solventien kommen alle üblicherweise für die Herstellung von Ködern verwendbaren organischen Lösungsmittel in Frage. Vorzugsweise in Betracht kommen niedrig siedende organische

Solventien, wie Methanol, Ethanol, Butanol und Methylenchlorid.

Als geeignete oberflächenaktive Stoffe kommen in Betracht nicht-ionische Wirkstoffe, wie Kondensationsprodukte von Polyalkylenoxiden und Alkylphenolen und Fettsäurepolyoxyalkylenestern, z.B. Octylphenoxypolyoxyethanol; Kationische Wirkstoffe wie quartäre Ammoniumsalze, z.B. Cetyltrimethylammoniumchlorid oder Cetylpyridiumchlorid und anionische Wirkstoffe, wie die Natriumsalze von langkettigen Alkylsulfaten, z.B. Natrium lautylsulfat, Salze von Alkylarylsulfaten, das Natriumsalz der Desoxydiolsäure, das Natriumsalz der Taurocholsäure, das Natriumsalz der Tauroglykocholsäure.

Eine andere bevorzugte Anwendungsform ist die Saatgutbeizung mit einer für Beizungen üblichen Formulierung.

Der Wirkstoffgehalt in den einzelnen Anwendungsformen kann in weiten Grenzen variieren, z. B. im Bereich von 0,001 bis 90, insbesondere 0,5 bis 50, vorzugsweise 1 bis 10 Gew.% bei Kornformulierungen und 10 bis 90 Gew.% bei Saatgutbeizen.

Die Aufwandmenge an Wirkstoff I liegt i.a. bei ca. 0,3 bis 30, vorzugsweise 1 bis 10 kg/ha.

Die molluskizide Wirkung der erfindungsgemäßen Mittel erstreckt sich auf landbewohnende und amphibische Schnecken, z. B. solche der Gattungen Deroceras (Agriolimax), Limax, Helix, Helicogona, Cepaea, Milax, Lymnaea (Galba), Achatina, Theba, Cochlicella, Helicarion, Vaginulus. Zu den Schadschnekken gehören z. B. die Nacktschnecken (slugs) Arion ater, A. lusitanicus, A. hortenis, Agriolimax reticulatus, Limax flavus, L. maximus, Milax gagates, Mariella dursumierei, Helicarion salius, Vaginula hedleyi, Pamarion pupillaris sowie die Gehäuseschnecken (snails) Helix aspersa spp., Cepaea nemoralis, Theba pisana, Achatina fulica, A. zanzibarica, Bradybaena spp., Cochlodina spp., Helicella spp., Euomphalia spp.

Die in den nachstehenden Tabellen 1 und 2 aufgeführten 3(2H)-Pyridazinone finden Verwendung zur Herstellung der erfindungsgemäßen Schneckenbekämpfungsmittel. Sie können analog dem folgenden Herstellungsbeispiel synthetisiert werden:

Herstellungsbeispiel

2-tert.-Butyl-4-chlor-5-[(3-isopropyl-isoxazol-5-yl)-methylthio]-3(2H)-pyridazin-3-on (Verbindung Nr. 262)

Zu 8,3 g (0,038 mol) 2-tert.-Butyl-4-chlor-5-mercapto-3-(2H)-pyrdazinon und 5,2 g (0,038 mol) Kaliumcarbonat in 50 ml Dimethylformamid gibt man bei Raumtemperatur (20 °C) 6,1 g (0,038 mol) 5-Chlormethyl-3-isopropylisoxazol. Anschließend rührt man 2 Stunden bei 80 °C und über Nacht bei Raumtemperatur nach. Zur Aufarbeitung gießt man in 200 ml Wasser und extrahiert mit Essigsäureethylester. Die organische Phase wird 2 mal mit Wasser gewaschen, über Magnesiumsulfat getrocknet, eingeengt und der Rückstand aus n-Hexan/Essigester = 4+1 umkristallisiert. Man erhält 8,5 g (66 %) 2-tert.-Butyl-4-chlor-5-[(3-isopropyl-isoxazol-5-yl)-methylthio]-3(2H)-pyridazin-3-on als farblose Kristalle vom Schmp. 94-96 °C.

Tabelle 1: Molluskizide 3(2H)-Pyridazinone der Formel Ia

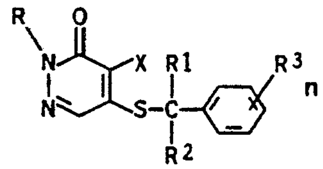

(Ia)

| Nr. | R | $R^1$ | $R^2$ | X | $R^3{}_n$ | Fp (°C) |
|---|---|---|---|---|---|---|
| 1 | Ethyl | H | H | Cl | 4-t-Butyl | 123-124,5 |
| 2 | Ethyl | H | H | Cl | 4-F | 106-108,5 |
| 3 | Ethyl | H | H | Cl | $3-CF_3$ | |
| 4 | Ethyl | H | H | Cl | 4-Phenyl | 140-143 |
| 5 | Ethyl | H | H | Cl | $4-OCH_2-$ | |
| 6 | Ethyl | H | H | Cl | 4-Cyclohexyl | |
| 7 | Ethyl | Methyl | H | Cl | $4-OCF_2CF_3$ | |
| 8 | Ethyl | Methyl | Methyl | Cl | 4-t-Butyl | |
| 9 | Ethyl | H | H | Br | 4-Cyclohexyl | |
| 10 | Ethyl | H | H | Br | $4-CF_3$ | |
| 11 | Ethyl | H | H | Br | $2,3,4,5,6-F_5$ | |
| 12 | Ethyl | Methyl | H | Br | 4-t-Butyl | |
| 13 | Ethyl | Methyl | H | Br | 4-F | |
| 14 | n-Propyl | H | H | Cl | 4-t-Butyl | 159-161 |
| 15 | n-Propyl | H | H | Cl | 4- 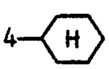 | |
| 16 | n-Propyl | H | H | Cl | 4- 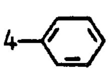 | |
| 17 | n-Propyl | H | H | Cl | 4-F | |
| 18 | n-Propyl | H | H | Cl | $2,4-Cl_2$ | |
| 19 | n-Propyl | Methyl | H | Cl | 4-t-Bu | |
| 20 | n-Propyl | Methyl | H | Cl | $4-OCH_2-$ 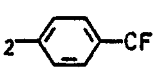 $-CF_3$ | |
| 21 | n-Propyl | Methyl | H | Cl | $2,4-Cl_2$ | |
| 22 | n-Propyl | H | H | Cl | $3,5-Cl_2$ | |
| 23 | n-Propyl | H | H | Cl | 3-CN | |
| 24 | n-Propyl | Methyl | H | Cl | 4-i-Propyl | |
| 25 | n-Propyl | Methyl | H | Cl | 4-Cl | |
| 26 | n-Propyl | Methyl | Methyl | Cl | 4-t-Butyl | |

Tabelle 1: Fortsetzung

| Nr. | R | $R^1$ | $R^2$ | X | $R^3{}_n$ | Fp (°C) |
|---|---|---|---|---|---|---|
| 27 | n-Propyl | H | H | Br | 2-$OCF_3$ | |
| 28 | n-Propyl | H | H | Br | 4-$OCH_2$– 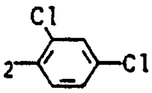 | |
| 29 | i-Propyl | H | H | Cl | 3,4-$Cl_2$ | 181-187 |
| 30 | i-Propyl | H | H | Cl | 4-t-Butyl | 141-142 |
| 31 | i-Propyl | H | H | Cl | 2-$NO_2$ | |
| 32 | i-Propyl | H | H | Cl | 4-OEthyl | |
| 33 | i-Propyl | Et | Methyl | Cl | 3-Br | |
| 34 | i-Propyl | n-Propyl | H | Cl | 4-Methyl | |
| 35 | i-Propyl | H | H | Br | 2-OMethyl | |
| 36 | i-Propyl | H | H | Br | 3-$CF_3$ | |
| 37 | i-Propyl | Methyl | H | Br | 4-F | |
| 38 | i-Propyl | Methyl | Methyl | Br | 4-$OCH_2$– 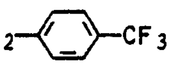 | |
| 39 | n-Butyl | H | H | Cl | 4-Br | |
| 40 | n-Butyl | H | H | Cl | 3,4-$Cl_2$ | |
| 41 | n-Butyl | H | H | Cl | 2-$CF_3$ | |
| 42 | n-Butyl | H | H | Cl | 3-$OCH_2$–$CF_3$ | |
| 43 | n-Butyl | Methyl | H | Cl | 4-Phenyl | |
| 44 | n-Butyl | n-Butyl | H | Cl | 4-Phenyl | |
| 45 | n-Butyl | Ethyl | Ethyl | Cl | 4-Phenyl | |
| 46 | n-Butyl | H | H | Br | 3-$OCF_3$ | |
| 47 | n-Butyl | H | H | Br | 4-$OCH_2$– 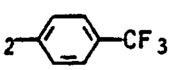 | |
| 48 | n-Butyl | H | H | Br | 2,4-$Cl_2$ | |
| 49 | i-Butyl | H | H | Cl | 3-Me | |
| 50 | i-Butyl | H | H | Cl | 3,4-$(Me)_2$ | |
| 51 | i-Butyl | H | H | Cl | 3-Cyclopentyl | |
| 52 | i-Butyl | H | H | Cl | 2-Cl, 4-Me | |
| 53 | i-Butyl | Methyl | H | Cl | 2-Cl, 4-F | |
| 54 | i-Butyl | Ethyl | H | Cl | 2,6-$Cl_2$ | |
| 55 | i-Butyl | Ethyl | Methyl | Br | 4-Cl | |
| 56 | s-Butyl | H | H | Cl | 2-Cl, 4-F | |
| 57 | s-Butyl | H | H | Cl | 2-Methyl, 4-Cl | |

Tabelle 1: Fortsetzung

| Nr. | R | $R^1$ | $R^2$ | X | $R^3_n$ | Fp (°C) |
|---|---|---|---|---|---|---|
| 58 | s-Butyl | H | H | Cl | 4-Cyclohexyl | |
| 59 | s-Butyl | H | H | Cl | 4-t-Butyl | |
| 60 | s-Butyl | H | H | Cl | 2,5-Dimethyl | |
| 61 | s-Butyl | Methyl | H | Cl | 4-F | |
| 62 | s-Butyl | Ethyl | H | Cl | 4-F | |
| 63 | s-Butyl | H | H | Cl | 4-$OCH_2$- 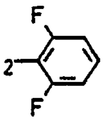 | |
| 64 | s-Butyl | H | H | Br | 4-Phenyl | |
| 65 | s-Butyl | H | H | Br | 4-CN | |
| 66 | s-Butyl | H | H | Br | 3-$CF_3$ | |
| 67 | s-Butyl | H | H | Br | 2-F, 4-$CF_3$ | |
| 68 | s-Butyl | Methyl | H | Br | 2-F, 4-Cl | |
| 69 | s-Butyl | i-Propyl | H | Br | 4-$OCF_3$ | |
| 70 | t-Butyl (Racemat) | Methyl | H | Cl | 4-t-Butyl | 100-106 |
| 71 | optisch aktive Verbindung (+) - 70 | | | | | 102,3-104,3 |
| 72 | optisch aktive Verbindung (-) - 70 | | | | | 102,2-106,7 |
| 73 | t-Butyl | H | H | Cl | 2-Methyl | 138-139 |
| 74 | t-Butyl | H | H | Cl | 3-Methyl | 86,5-87,5 |
| 75 | t-Butyl | H | H | Cl | 4-Methyl | 119-120 |
| 76 | t-Butyl | H | H | Cl | 4-i-Propyl | 96,5-98 |
| 77 | t-Butyl | H | H | Cl | 2-Cl | |
| 78 | t-Butyl | H | H | Cl | 2,4-$Cl_2$ | |
| 79 | t-Butyl | H | H | Cl | 3,4-$Cl_2$ | 111-112 |
| 80 | t-Butyl | H | H | Cl | 2-Cl, 4-Methyl | |
| 81 | t-Butyl | H | H | Cl | 2-F, 4-Cl | |
| 82 | t-Butyl | H | H | Cl | 4-F | 112,5-114 |
| 83 | t-Butyl | H | H | Cl | 4-Cyclohexyl | 157-159 |
| 84 | t-Butyl | H | H | Cl | 4- 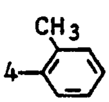 | |
| 85 | t-Butyl | H | H | Cl | 3-$CF_3$ | |
| 86 | t-Butyl | H | H | Cl | 3-OMethyl | |
| 87 | t-Butyl | H | H | Cl | 4-$OCF_3$ | |
| 88 | t-Butyl | H | H | Cl | 2-$OCF_3$, 4-Cl | |

Tabelle 1: Fortsetzung

| Nr. | R | $R^1$ | $R^2$ | X | $R^3_n$ | Fp (°C) |
|---|---|---|---|---|---|---|
| 89 | t-Butyl | H | H | Cl | 2,3,4,5,6-$F_5$ | |
| 90 | t-Butyl | H | H | Cl | 4-Phenyl | 169-171 |
| 91 | t-Butyl | H | H | Cl | 4- 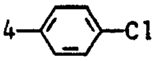 Cl | |
| 92 | t-Butyl | H | H | Cl | 4-Br | 144-146 |
| 93 | t-Butyl | H | H | Cl | 2-$OCH_2$- 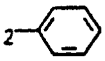 | |
| 94 | t-Butyl | H | H | Cl | 4-$OCH_2$- 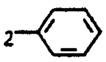 | |
| 95 | t-Butyl | H | H | Cl | 4-$OCH_2$- 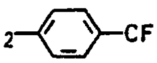 $CF_3$ | |
| 96 | t-Butyl | Methyl | H | Cl | 3-Methyl | 118-119 |
| 97 | t-Butyl | Methyl | H | Cl | 4-Methyl | 83-84 |
| 98 | t-Butyl | Methyl | H | Cl | 4-i-Propyl | 73-74,5 |
| 99 | t-Butyl | Methyl | H | Cl | 4-Cyclopentyl | |
| 100 | t-Butyl | Methyl | H | Cl | 4-Cyclohexyl | 102-104 |
| 101 | t-Butyl | Methyl | H | Cl | 4-Br | 122,5-123-5 |
| 102 | t-Butyl | Methyl | H | Cl | 4-Cl | 98,5-99,5 |
| 103 | t-Butyl | Methyl | H | Cl | 4-Phenyl | 140-142 |
| 104 | t-Butyl | Ethyl | H | Cl | 4-t-Butyl | Öl |
| 105 | t-Butyl | Methyl | Me | Cl | 4-Cyclohexyl | |
| 106 | t-Butyl | H | H | Cl | 2-$NO_2$ | 121 |
| 107 | t-Butyl | H | H | Br | 4-Methyl | |
| 108 | t-Butyl | H | H | Br | 4-F | |
| 109 | t-Butyl | Ethyl | H | Cl | 4-Cl | Öl |
| 110 | t-Butyl | H | H | Br | 4-$CF_3$ | |
| 111 | t-Butyl | H | H | Br | 2-$OCH_2CF_3$ | |
| 112 | t-Butyl | H | H | Br | 4-$OCF_3$ | |
| 113 | t-Butyl | H | H | Br | 4-CN | |
| 114 | t-Butyl | H | H | Br | 3-$NO_2$ | |
| 115 | t-Butyl | H | H | Br | 4-Phenyl | |
| 116 | t-Butyl | H | H | Br | 4-$OCH_2$- 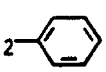 | |
| 117 | t-Butyl | Methyl | H | Br | 2-F | |

Tabelle 1: Fortsetzung

| Nr. | R | $R^1$ | $R^2$ | X | $R^3_n$ | Fp (°C) |
|---|---|---|---|---|---|---|
| 118 | t-Butyl | Methyl | H | Br | 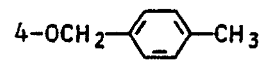 | |
| 119 | t-Butyl | n-Propyl | Methyl | Br | 4-Phenyl | |
| 120 | t-Butyl | H | H | Cl | 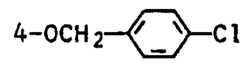 | 143-146 |
| 121 | t-Butyl | H | H | Cl | 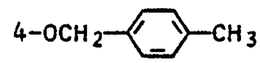 | 120-122,2 |
| 122 | t-Butyl | H | H | Cl | 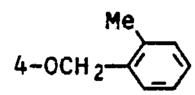 | 110-111 |
| 123 | t-Butyl | H | H | Cl | 4-$OCH_2CH=CH_2$ | 59-68 |
| 124 | t-Butyl | H | H | Cl | 4-$SC_4H_9$-n | Öl |
| 125 | t-Butyl | H | H | Cl | 4-$SCH_3$ | Harz |
| 126 | t-Butyl | H | H | Cl | 3-$OC_4H_9$-n | Harz |
| 127 | t-Butyl | H | H | Cl | 4-$Si(CH_3)_3$ | 99,6-101,4 |
| 128 | t-Butyl | Methyl | H | Cl | 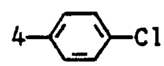 | 149-150 |
| 129 | t-Butyl | Methyl | H | Cl | 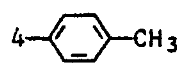 | 118-120 |
| 130 | t-Butyl | H | H | Cl | 4-$SCHF_2$ | 77-77,5 |
| 131 | t-Butyl | H | H | Cl | 4-$OCH_2CH_2CH_2Cl$ | Harz |
| 132 | t-Butyl | H | H | Cl | 4-$OCHF_2$ | 75-78 |
| 133 | t-Butyl | H | H | Br | 4-t-Butyl | 137-139 |
| 134 | t-Butyl | H | H | Br | 4-Cl | 163-165 |
| 135 | t-Butyl | H | H | Cl | 4-Cyclopropyl | 68-68,3 |
| 136 | t-Butyl | H | H | Cl | 4-$C(CH_3)_2CH_2$-Cl | 127-129 |
| 137 | t-Butyl | H | H | Cl | 4-$OCHC(CH_3)=CH_2$ | 98,6-100 |
| 138 | t-Butyl | H | H | Cl | 3,5-(t-$C_2H_9)_2$, 4-OH | 164,7-166,3 |
| 139 | t-Butyl | H | H | Cl | 3,5-$(Br)_2$, 4-OH | 191,7-193,4 |
| 140 | t-Butyl | H | H | Br | 4-Cyclohexyl | 147-152 |
| 141 | t-Butyl | H | H | Br | 4-n-Butyl | 84-86 |
| 142 | t-Butyl | H | H | Br | 4-$OC_6H_{13}$-n | 71-73 |
| 143 | t-Butyl | Me | H | Br | 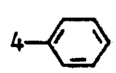 | Öl |
| 144 | t-Butyl | H | H | Cl | 4-$N(CH_3)_2$ | 136,5-140 |

Tabelle 1: Fortsetzung

| Nr. | R | $R^1$ | $R^2$ | X | $R^3{}_n$ | Fp (°C) |
|---|---|---|---|---|---|---|
| 145 | t-Butyl | H | H | Cl | $3-OCH_3$, $4-OC_3H_7-i$ | 86-88 |
| 146 | t-Butyl | H | H | Cl | 4-I | 117-118 |
| 147 | t-Butyl | H | H | Cl | $4-OC_2H_5$ | 90-91 |
| 148 | t-Butyl | H | H | Cl | $4-OC_3H_7$ | 105-106 |
| 149 | t-Butyl | H | H | Cl | 4-i-Butyl | 125-129 |
| 150 | t-Butyl | H | H | Cl | 4-n-Butyl | 92-94 |
| 151 | t-Butyl | H | H | Cl | $4-n-C_6H_{13}$ | 104-106 |
| 152 | t-Butyl | H | H | Cl | $4-n-C_7H_{15}$ | Harz |
| 153 | t-Butyl | H | H | Cl | $4-n-C_8H_{17}$ | 55-65 |
| 154 | t-Butyl | H | H | Cl | 4-s-Butyl | 95-97 |
| 155 | t-Butyl | H | H | Cl | $4-t-C_5H_{11}$ | 142-143 |
| 156 | t-Butyl | H | H | Cl | $4-COOCH_3$ | 117-122 |
| 157 | t-Butyl | H | H | Cl | $4-OC_3H_7-i$ | 131-132,5 |
| 158 | t-Butyl | H | H | Cl | $4-OCH_2CH(C_2H_5)C_4H_9-n$ | Öl |
| 159 | t-Butyl | H | H | Cl | $4-OC_9H_{10}-n$ | Öl |
| 160 | t-Butyl | H | H | Cl | $4-OC_{11}H_{23}-n$ | Öl |
| 161 | t-Butyl | Methyl | H | Cl | $4-OC_{10}H_{21}-n$ | Öl |
| 162 | t-Butyl | H | H | Cl | $4-OC_4H_9-n$ | 89-89,5 |
| 163 | t-Butyl | H | H | Cl | $4-OC_5H_{11}-n$ | 88-88,5 |
| 164 | t-Butyl | H | H | Cl | $4-OC_6H_{13}-n$ | 85-86 |
| 165 | t-Butyl | H | H | Cl | $4-OC_7H_{15}-n$ | 77-78 |
| 166 | t-Butyl | H | H | Cl | $4-OC_8H_{17}-n$ | 64-66 |
| 167 | t-Butyl | H | H | Cl | $2,6-(CH_3)_2$, $4-t-C_4H_9$ | 207-208,5 |
| 168 | t-Butyl | H | H | Cl | $3,5-Br_2$, $4-OC_3H_7-i$ | 46-48 |
| 169 | t-Butyl | H | H | Cl | 4-Cl | 142-143 |
| 170 | t-Butyl | H | H | Cl | $4-CF_3$ | 125-127 |
| 171 | t-Butyl | H | H | Cl | $4-OCH_2-$ 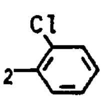 | 132-133 |
| 172 | t-Butyl | H | H | Cl | 4-Benzyl | Öl |
| 173 | t-Butyl | H | H | Cl | $4-OCH(CH_3)COOC_2H_5$ | 111-113 |
| 174 | t-Butyl | H | H | Cl | $4-OCH_2CH=CH-CH_3$ | 64-66 |
| 175 | t-Butyl | H | H | Cl | 4-SCN | 104,5-109 |
| 176 | n-Pentyl | H | H | Cl | 4-Cl | |
| 177 | n-Pentyl | H | H | Cl | 3-Methyl | |

Tabelle 1: Fortsetzung

| Nr. | R | $R^1$ | $R^2$ | X | $R^3_n$ | Fp (°C) |
|---|---|---|---|---|---|---|
| 178 | n-Pentyl | H | H | Cl | 4-Cyclohexyl | |
| 179 | n-Pentyl | Methyl | H | Cl | 4-CN | |
| 180 | n-Pentyl | Ethyl | H | Cl | 3-$CF_3$ | |
| 181 | n-Pentyl | Ethyl | Et | Cl | 4-Phenyl | |
| 182 | n-Pentyl | H | H | Br | 2-$OCH_2$- 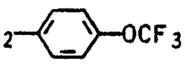 | |
| 183 | n-Pentyl | H | H | Br | 2-Cl, 4-$CH_3$ | |
| 184 | n-Pentyl | Methyl | H | Br | 2-$CH_3$, 4-Cl | |
| 185 | i-Pentyl | H | H | Cl | 4-Br | |
| 186 | i-Pentyl | H | H | Cl | 4-$NO_2$ | |
| 187 | i-Pentyl | H | H | Cl | 4-Cyclopentyl | |
| 188 | i-Pentyl | H | H | Cl | 3-$OCH_2$- 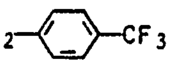 | |
| 189 | i-Pentyl | Methyl | H | Cl | 4-$OCH_2$- 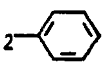 | |
| 190 | i-Pentyl | Ethyl | H | Br | 3-$OCF_2CF_3$ | |
| 191 | n-Hexyl | H | H | Cl | 2-F | |
| 192 | n-Hexyl | H | H | Cl | 4-Ethyl | |
| 193 | n-Hexyl | H | H | Cl | 2-$OCH_2$- 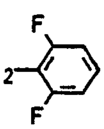 | |
| 194 | n-Hexyl | H | H | Cl | 4-$OCH_2$- 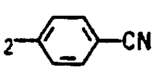 | |
| 195 | n-Hexyl | H | H | Cl | 4-Cyclohexyl | |
| 196 | n-Hexyl | Methyl | H | Cl | 4-CN | |
| 197 | n-Hexyl | Methyl | H | Cl | 2-$NO_2$ | |
| 198 | n-Hexyl | Ethyl | Methyl | Cl | 4-F | |
| 199 | n-Hexyl | Ethyl | Methyl | Cl | 4-$OCH_2$- 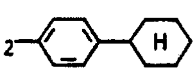 | |
| 200 | n-Hexyl | H | H | Br | 4-$CF_3$ | |
| 201 | n-Hexyl | H | H | Br | 3-$OCF_3$ | |
| 202 | n-Hexyl | H | H | Br | 4-$OCH_2$- 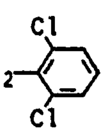 | |

Tabelle 1: Fortsetzung

| Nr. | R | $R^1$ | $R^2$ | X | $R^3{}_n$ | Fp (°C) |
|---|---|---|---|---|---|---|
| 203 | n-Hexyl | Methyl | H | Br | 4-Phenyl | |
| 204 | n-Hexyl | Methyl | H | Br | 3-$OCF_3$ | |
| 205 | n-Hexyl | Methyl | H | Br | 4-Cl | |
| 206 | n-Hexyl | Ethyl | H | Br | 2-$CH_3$ | |
| 207 | n-Hexyl | Ethyl | Methyl | Br | 2,4-$(CH_3)_2$ | |
| 208 | n-Hexyl | Ethyl | Ethyl | Br | 3,4-$Cl_2$ | |
| 209 | n-Hexyl | Ethyl | Ethyl | Br | 4-$OCH_2$- 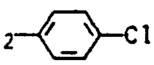 | |
| 210 | Ethyl | H | H | Cl | 4-O- 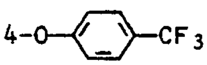 | 127-131 |
| 211 | Ethyl | H | H | Cl | 2-O- 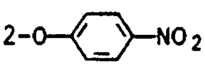 | |
| 212 | Ethyl | H | H | Cl | 2-Cl, 4-O- 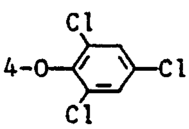 | |
| 213 | Ethyl | H | H | Cl | 2,6-$Cl_2$, 3-O- 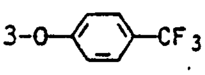 | |
| 214 | Ethyl | Ethyl | Methyl | Br | 2-S- 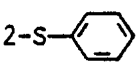 | |
| 215 | i-Propyl | H | H | Br | 2-Cl, 4-O- 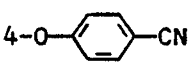 | |
| 216 | i-Propyl | Methyl | Methyl | Br | 4-S- 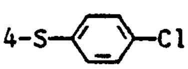 | |
| 217 | i-Propyl | H | H | Cl | 4-O- 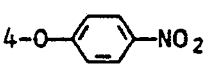 | |
| 218 | i-Propyl | H | H | Cl | 4-O- 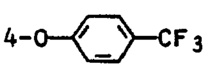 | 133-135 |
| 219 | i-Propyl | Methyl | H | Cl | 3-O- 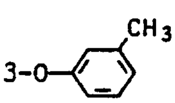 | |
| 220 | n-Propyl | Methyl | H | Br | 4-O- 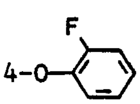 | |
| 221 | n-Propyl | H | H | Cl | 4-O- 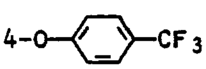 | 137-140 |

Tabelle 1: Fortsetzung

| Nr. | R | $R^1$ | $R^2$ | X | $R^3_n$ | Fp (°C) |
|---|---|---|---|---|---|---|
| 222 | n-Propyl | Ethyl | H | Cl | 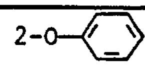 | |
| 223 | i-Butyl | n-Propyl | H | Br | 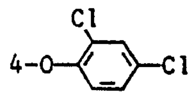 | |
| 224 | i-Butyl | Methyl | H | Br | 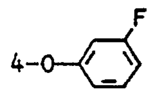 | |
| 225 | n-Butyl | H | H | Br | 2-Cl, 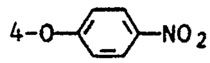 | |
| 226 | n-Butyl | H | H | Cl | 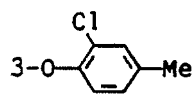 | |
| 227 | n-Butyl | H | H | Cl | 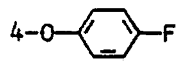 | |
| 228 | n-Butyl | H | H | Cl | 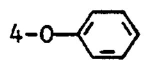 | |
| 229 | s-Butyl | H | H | Cl | 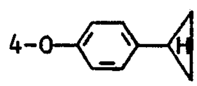 | |
| 230 | t-Butyl | H | H | Cl | 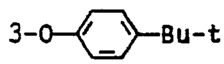 | |
| 231 | t-Butyl | Methyl | Methyl | Br | 2,6-$Cl_2$, 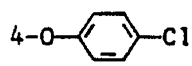 | |
| 232 | t-Butyl | H | H | Br | 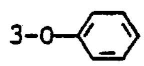 | |
| 233 | t-Butyl | Ethyl | H | Br | 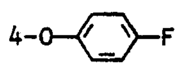 | |
| 234 | t-Butyl | H | H | Br | 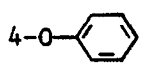 | |
| 235 | t-Butyl | Methyl | Methyl | Br | 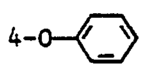 | |
| 236 | t-Butyl | H | H | Cl | 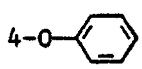 | |
| 237 | t-Butyl | H | H | Cl | 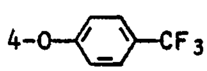 | 152-155,5 |

Tabelle 1: Fortsetzung

| Nr. | R | $R^1$ | $R^2$ | X | $R^3_n$ | Fp (°C) |
|---|---|---|---|---|---|---|
| 238 | t-Butyl | H | H | Cl | 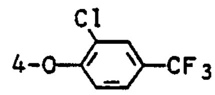 | 109-110 |
| 239 | t-Butyl | Methyl | H | Cl | 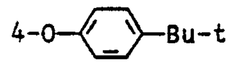 | öl |
| 240 | t-Butyl | H | H | Cl | 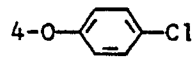 | 146-147 |
| 241 | t-Butyl | H | H | Cl | 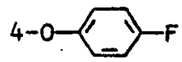 | |
| 242 | t-Butyl | H | H | Cl | 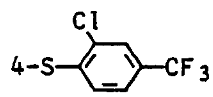 | |
| 243 | t-Butyl | H | H | Cl | 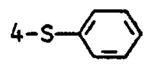 | öl |
| 244 | i-Pentyl | H | H | Cl | 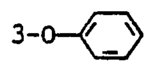 | |
| 245 | i-Pentyl | H | H | Cl | 3-Cl, 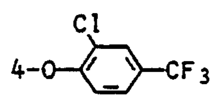 | |
| 246 | i-Pentyl | Methyl | H | Cl | $2,4-Cl_2$, 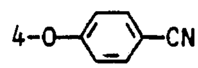 | |
| 247 | i-Pentyl | Ethyl | Methyl | Br | 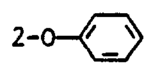 | |
| 248 | i-Pentyl | Methyl | Methyl | Cl | 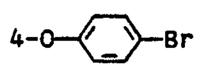 | |
| 249 | i-Pentyl | Ethyl | Ethyl | Br | 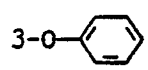 | |
| 250 | n-Pentyl | H | H | Cl | 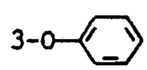 | |
| 251 | n-Hexyl | H | H | Cl | 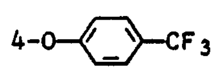 | |
| 252 | n-Hexyl | H | H | Cl | 2-Cl, 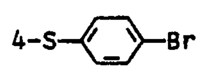 | |
| 253 | n-Hexyl | H | H | Br | $3,5-Cl_2$, 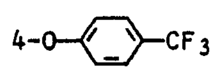 | |
| 254 | t-Butyl | H | H | Cl | 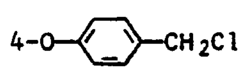 | öl |

Tabelle 2:

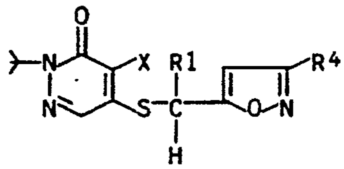

(Ib)

| Verb.-Nr. | X | $R^1$ | $R^4$ | Fp. (°C) |
|---|---|---|---|---|
| 255 | Cl | H | Methyl | 127-129 |
| 256 | Br | H | Methyl | |
| 257 | Cl | Methyl | $CH_3$ | |
| 258 | Cl | H | Ethyl | 108-110 |
| 259 | Cl | Methyl | Ethyl | |
| 260 | Cl | H | n-Propyl | 82-84 |
| 261 | Cl | Methyl | n-Propyl | |
| 262 | Cl | H | iso-Propyl | 94-96 |
| 263 | Cl | Methyl | iso-Propyl | |
| 264 | Br | H | iso-Propyl | |
| 265 | Cl | H | n-Butyl | 52-54 |
| 266 | Cl | Methyl | n-Butyl | |
| 267 | Br | H | n-Butyl | |
| 268 | Cl | H | sec.-Butyl | 58-60 |
| 269 | Cl | Methyl | sec.-Butyl | |
| 270 | Cl | H | tert.-Butyl | 106-109 |
| 271 | Cl | Methyl | tert.-Butyl | |
| 272 | Br | H | tert.-Butyl | |
| 273 | Cl | H | n-Hexyl | |
| 274 | Cl | H | 1-Ethyl-pent-1-yl | Öl |
| 275 | Cl | H | 2,4,4-Trimethyl-pent-1-yl | 59-60 |
| 276 | Cl | H | Cyclopropyl | 126-127 |
| 277 | Br | H | Cyclopropyl | |
| 278 | Cl | H | Cyclopentyl | |
| 279 | Cl | H | Cyclohexyl | 88-92 |
| 280 | Cl | Methyl | Cyclohexyl | |
| 281 | Br | H | Cyclohexyl | |
| 282 | Cl | H | (2,2-Dimethyl)-vinyl | |
| 283 | Br | H | (2,2-Dimethyl)-vinyl | |
| 284 | Cl | H | (1,2-Dibrom-2,2-dimethyl)-ethyl | |
| 285 | Cl | H | Trifluormethyl | |
| 286 | Br | H | Trifluormethyl | |
| 287 | Cl | Methyl | Trifluormethyl | |
| 288 | Cl | H | Methoxy-methyl | |

Tabelle 2: Fortsetzung

| Verb.-Nr. | X | $R^1$ | $R^4$ | Fp. (°C) |
|---|---|---|---|---|
| 289 | Cl | H | (1-Methoxy)-ethyl | 82-84 |
| 290 | Cl | Methyl | (1-Methoxy)-ethyl | |
| 291 | Br | H | (1-Methoxy)-ethyl | |
| 292 | Cl | H | (1-Methoxy)-propyl | |
| 293 | Cl | H | (2-Methoxy)-propyl | |
| 294 | Cl | H | Methoxycarbonyl | |
| 295 | Cl | Methyl | Methoxycarbonyl | |
| 296 | Cl | H | Ethoxycarbonyl | 73-74 |
| 297 | Br | H | Ethoxycarbonyl | |
| 298 | Cl | H | Benzyl | |
| 399 | Cl | H | Phenetyl | |
| 300 | Cl | Methyl | 2-(4-tert.-butylphenyl)-1-methylethyl | Harz |
| 301 | Cl | H | Phenyl | 108-111 |
| 302 | Cl | Methyl | Phenyl | 50-52 |
| 303 | Br | H | Phenyl | |
| 304 | Br | Methyl | Phenyl | |
| 305 | Cl | H | (2-Methyl)-phenyl | |
| 306 | Cl | H | (3-Methyl)-phenyl | |
| 307 | Cl | H | (4-Methyl)-phenyl | 150-154 |
| 308 | Cl | H | (2-Ethyl)-phenyl | |
| 309 | Cl | H | (4-Ethyl)-phenyl | |
| 310 | Cl | H | (4-iso-Propyl)-phenyl | |
| 311 | Cl | H | (4-tert.-Butyl)-phenyl | 127-128 |
| 312 | Cl | H | (2,4-Dimethyl)-phenyl | |
| 313 | Cl | H | (3,5-Di-tert.-butyl)-phenyl | |
| 314 | Cl | H | (2,4,6-Trimethyl)-phenyl | |
| 315 | Cl | H | (4-Phenyl)-phenyl | 136-140 |
| 316 | Cl | Methyl | (4-Phenyl)-phenyl | |
| 317 | Cl | H | (2-Methoxy)-phenyl | |
| 318 | Cl | Methyl | (2-Methoxy)-phenyl | |
| 319 | Cl | H | (3-Methoxy)-phenyl | |
| 320 | Cl | H | (4-Methoxy)-phenyl | 148-150 |
| 321 | Cl | Methyl | (4-Methoxy)-phenyl | |
| 322 | Cl | H | (2-Ethoxy)-phenyl | |
| 323 | Cl | H | (3-Ethoxy)-phenyl | |
| 324 | Cl | H | (4-Ethoxy)-phenyl | |
| 325 | Cl | Methyl | (4-Ethoxy)-phenyl | |
| 326 | Cl | H | (4-tert.-Butoxy)-phenyl | |

Tabelle 2: Fortsetzung

| Verb.-Nr. | X | $R^1$ | $R^4$ | Fp. (°C) |
|---|---|---|---|---|
| 327 | Cl | H | (2-n-Butoxy)-phenyl | 87-88 |
| 328 | Cl | H | (4-n-Hexoxy)-phenyl | 70-78 |
| 329 | Cl | H | (2-n-Octoxy)-phenyl | 70-71 |
| 330 | Cl | Methyl | (2-n-Octoxy)-phenyl | |
| 331 | Cl | H | (2,4-Dimethoxy)-phenyl | |
| 332 | Cl | H | (3,5-Dimethoxy)-phenyl | |
| 333 | Cl | H | (2,5-Dimethoxy)-phenyl | |
| 334 | Cl | H | (2,3-Dimethoxy)-phenyl | |
| 335 | Cl | H | (2,4,6-Trimethoxy)-phenyl | |
| 336 | Cl | H | (2,3,4-Trimethoxy)-phenyl | |
| 337 | Cl | H | (2,4,5-Trimethoxy)-phenyl | |
| 338 | Cl | H | (4-Trifluormethyl)-phenyl | 157-160 |
| 339 | Cl | Methyl | (4-Trifluormethyl)-phenyl | |
| 340 | Cl | H | (2-Trifluormethyl)-phenyl | Harz |
| 341 | Cl | H | (3-Trifluormethyl)-phenyl | |
| 342 | Cl | H | (Chlor-difluormethyl)-phenyl | |
| 343 | Cl | H | (4-Difluormethoxy)-phenyl | |
| 344 | Cl | H | 2-(1,1,2,2-Tetrafluorethoxy)phenyl | Harz |
| 345 | Cl | H | 3-(1,1,2,2-Tetrafluorethoxy)phenyl | |
| 346 | Cl | H | 4-(1,1,2,2-Tetrafluorethoxy)phenyl | |
| 347 | Cl | H | (2-Fluor)-phenyl | Harz |
| 348 | Cl | Methyl | (2-Fluor)-phenyl | Öl |
| 349 | Cl | H | (3-Fluor)-phenyl | 128-134 |
| 350 | Br | H | (3-Fluor)-phenyl | |
| 351 | Cl | H | (4-Fluor)-phenyl | 165-167 |
| 352 | Cl | Methyl | (4-Fluor)-phenyl | Öl |
| 353 | Cl | H | (2-Chlor)-phenyl | Harz |
| 354 | Cl | Methyl | (2-Chlor)-phenyl | Öl |
| 355 | Cl | H | (3-Chlor)-phenyl | |
| 356 | Cl | H | (4-Chlor)-phenyl | 166-170 |
| 357 | Cl | H | (3-Brom)-phenyl | |
| 358 | Cl | H | (3-Brom)-phenyl | |
| 359 | Cl | H | (4-Brom)-phenyl | |
| 360 | Cl | H | (2,6-Difluor)-phenyl | Harz |
| 361 | Cl | Methyl | (2,6-Difluor)-phenyl | Öl |
| 362 | Cl | H | (2-Chlor-6-fluor)-phenyl | 125-128 |
| 363 | Cl | Methyl | (2-Chlor-6-fluor)-phenyl | |
| 364 | Br | H | (2-Chlor-6-fluor)-phenyl | |
| 365 | Cl | H | (2,3-Dichlor)-phenyl | |

Tabelle 2: Fortsetzung

| Verb.-Nr. | X | $R^1$ | $R^4$ | Fp. (°C) |
|---|---|---|---|---|
| 366 | Cl | H | (3,4-Dichlor)-phenyl | 133-135 |
| 367 | Cl | Methyl | (3,4-Dichlor)-phenyl | |
| 368 | Cl | H | (2,4-Dichlor)-phenyl | |
| 369 | Cl | H | (3,5-Dichlor)-phenyl | |
| 370 | Cl | H | (2,3,4-Trichlor)-phenyl | |
| 371 | Cl | H | (2-Chlor-6-nitro)-phenyl | |
| 372 | Cl | H | (4-Chlor-3-nitro)-phenyl | |
| 373 | Cl | H | (2-Chlor-5-nitro)-phenyl | |
| 374 | Cl | H | (5-Chlor-2-nitro)-phenyl | |
| 375 | Cl | H | (2,4-Dichlor-5-nitro)-phenyl | |
| 376 | Cl | H | (2,6-Dichlor-3-nitro)-phenyl | |
| 377 | Cl | H | (3-Brom-4-methoxy)-phenyl | 147-149 |
| 378 | Cl | Methyl | (3-Brom-4-methoxy)-phenyl | |
| 379 | Cl | H | (5-Brom-2-methoxy)-phenyl | |
| 380 | Cl | H | (2-Nitro)-phenyl | |
| 381 | Br | H | (2-Nitro)-phenyl | |
| 382 | Cl | H | (3-Nitro)-phenyl | 127-129 |
| 383 | Cl | Methyl | (3-Nitro)-phenyl | |
| 384 | Br | H | (3-Nitro)-phenyl | |
| 385 | Cl | H | (4-Nitro)-phenyl | |
| 386 | Cl | H | (2,4-Dinitro)-phenyl | |
| 387 | Cl | H | (4-Methyl-3-nitro)-phenyl | |
| 388 | Cl | H | (4-Phenoxy)-phenyl | 117-119 |
| 389 | Cl | Methyl | (4-Phenoxy)-phenyl | |
| 390 | Br | H | (4-Phenoxy)-phenyl | |
| 391 | Cl | H | (2-Cyano)-phenyl | |
| 392 | Cl | Methyl | (2-Cyano)-phenyl | |
| 393 | Cl | H | (4-Cyano)-phenyl | 164-169 |
| 394 | Cl | Methyl | (4-Cyano)-phenyl | |
| 395 | Br | H | (4-Cyano)-phenyl | |

Tabelle 3:

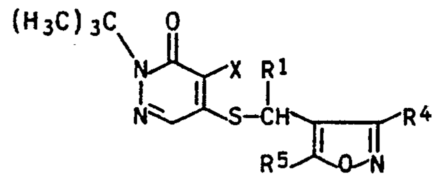

(Ic)

| Verb.-Nr. | X | $R^1$ | $R^4$ | $R^5$ | physikalische Daten |
|---|---|---|---|---|---|
| 396 | Cl | H | Methyl | Methyl | Fp.: 137-140°C |
| 397 | Cl | H | Methyl | Br | |
| 398 | Cl | H | iso-Propyl | Methyl | |
| 499 | Cl | H | iso-Propyl | Br | |
| 400 | Cl | H | Phenyl | H | |
| 401 | Cl | H | Phenyl | Methyl | |
| 402 | Cl | H | Phenyl | Br | |
| 403 | Cl | H | (2-Fluor)-phenyl | Methyl | |
| 404 | Cl | H | (4-Fluor)-phenyl | Methyl | |
| 405 | Cl | H | (2-Chlor-6-fluor)-phenyl | Methyl | |

Formulierungsbeispiel 1

In einem Mischer werden 2 kg Verbindung Nr. 301, 8 kg Calciumstearat, 0,2 kg Natriumbenzoat, 20 kg Kreide, 0,5 kg blauer Farbstoff und 69,3 kg Weizenkleie gemischt. Diese Mischung wird anschließend in einem Kneter mit ausreichend Wasser befeuchtet und geknetet. Danach wird die feuchte Mischung in einem Extruder zu Schneckenködergranulat mit einem Durchmesser von 3 mm geformt und bei maximal 60° C getrocknet.

Formulierungsbeispiel 2

Zur Herstellung einer Saatgutbeize werden gemischt:

| | | |
|---|---|---|
| 480 | g | Verbindung Nr. 301 |
| 20 | g | handelsübliches Phenolsulfonsäure-Harnstoff-Formaldehyd-Kondensat |
| 40 | g | Ethylen-Propylen-Blockcopolymerisat mit einem Molgewicht von 10.000 |
| 2 | g | Xanthan-Gummi |
| 0,5 | g | Rhodamin FB |
| 80 | g | 1,2-Propylenglykol |
| 5 | g | Silikon-Antischaummittel |

und mit Wasser auf 1 Liter aufgefüllt.

Anwendungsbeispiele

Petrischalen (Durchmesser 94 mm) wurden mit je 5 Schnecken besetzt und ein Teil eines Salatblattes (1 g) zugefügt, das vorher in eine Wirkstofflösung in angegebener Konzentration getaucht wurde. Alle

Versuche wurden im Klimaschrank bie 20°C, L/D (Licht/Dunkelheit) = 18:6 Stunden aufgestellt. Nach 4 Tagen wurde die Mortalität der Schnecken bestimmt.

| A) Arion hortensis (Garten-Wegschnecke) | | |
|---|---|---|
| 2 - 3 cm Körperlänge | | |
| Verbindung Nr. | Konzentration % | Anzahl toter Schnecken |
| 301 | 0,1 | 5 |
| | 0,02 | 1 |
| unbehandelt | - | 0 |
| B) Deroceras reticulatum (Acker-Schnecke) | | |
| 2 - 3 cm Körperlänge | | |
| Verbindung Nr. | Konzentration % | Anzahl toter Schnecken |
| 301 | 0,1 | 5 |
| | 0,02 | 0 |
| unbehandelt | - | 0 |

**Ansprüche**

1. Verwendung von 3(2H)-Pyridazinonderivaten der allgemeinen Formel I

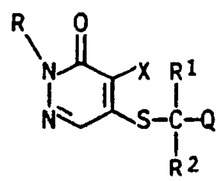

(I),

in der die Substituenten die folgende Bedeutung haben:
R $C_2$-$C_6$-Alkyl,
$R^1$, $R^2$ Wasserstoff, $C_1$-$C_4$-Alkyl,
X Halogen,
Q gegebenenfalls substituiertes Phenyl oder Isoxazolyl,
mit der Maßgabe, daß R keine tert.-Butylgruppe darstellt, wenn X für Chlor und Q für 4-tert.-Butylphenyl steht, zur Bekämpfung von Mollusken.

2. Verfahren zur Bekämpfung von Mollusken, dadurch gekennzeichnet, daß man die vor Mollusken zu schützenden Pflanzen und/oder ihre Umgebung mit 3(2H)-Pyridazinonderivaten der allgemeinen Formel I

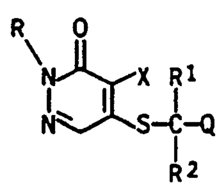

(I),

in der die Substituenten die folgende Bedeutung haben:
R $C_2$-$C_6$-Alkyl,
$R^1$, $R^2$ Wasserstoff, $C_1$-$C_4$-Alkyl,
X Halogen,
Q gegebenenfalls substituiertes Phenyl oder Isoxazolyl,

mit der Maßgabe, daß R keine tert.-Butylgruppe darstellt, wenn X für Chlor und Q für 4-tert.-Butylphenyl steht, behandelt.

3. Verfahren zur Herstellung molluskizider Mittel, dadurch gekennzeichnet, daß man die Verbindungen nach Anspruch 1 mit einem festen Trägermaterial, einem Fraß- bzw. Lockmittel sowie üblichen inerten Zusatzstoffen mischt.

4. Schneckenfraßköder, gekennzeichnet durch den Gehalt an 3(2H)-Pyridazinonen der allgemeinen Formel I gemäß Anspruch 1.

5. Saatgutbeizmittel, gekennzeichnet durch den Gehalt an 3(2H)-Pyridazinonen der allgemeinen Formel I gemäß Anspruch 1.

6. Verfahren zum Schutz von landwirtschaftlichen und gärtnerischen Kulturpflanzen gegen Mollusken, dadurch gekennzeichnet, daß man die zu schützenden Pflanzen oder ihre Umgebung mit Mitteln behandelt, die 3(2H)-Pyridazinone der allgemeinen Formel I gemäß Anspruch 1 enthalten.